# EUROPEAN PATENT APPLICATION

(11) **EP 4 438 566 A1**
(43) Date of publication of application: **02.10.2024**
(21) Application number: 24166557.9
(22) Date of filing: 26.03.2024
(51) Int. Cl.: C02F 1/32, C02F 103/04

(54) **FLUID TREATMENT DEVICE AND LIGHTING CIRCUIT**

(30) Priority: 31.03.2023 JP 2023057772
(71) Applicant: Ushio Denki Kabushiki Kaisha, Tokyo 100-8150 (JP)
(72) Inventor: ODA, Koji, Tokyo, 100-8150 (JP); URAKAMI, Hideyuki, Tokyo, 100-8150 (JP); FUJISAWA, Shigeki, Tokyo, 100-8150 (JP); SHIGOKU, Minoru, Tokyo, 100-8150 (JP)
(74) Representative: Maiwald GmbH

(57) **Abstract**

Provided are a fluid treatment device (1) and a lighting circuit (20) that allow a dielectric barrier discharge lamp to be stably lit irrespective of state of treatment of a fluid. A fluid treatment device (1) includes: a lighting circuit (20) of a flyback type, the lighting circuit including a direct-current power source (21), a transformer (30) including a primary winding (L1) and a secondary winding (L2), at least one switching element (22), and a controller (24) to control the switching element; and an ultraviolet irradiation unit (10) connected to the secondary winding of the transformer, the ultraviolet irradiation unit including a light-emitting tube (11) in which a light-emitting gas is sealed, a first electrode (13a) disposed in the light-emitting tube, and a second electrode (13b), wherein a space (A1) into which a fluid to be treated flows being interposed between the first electrode and the second electrode.

## Description

### TECHNICAL FIELD

The present invention relates to a fluid treatment device and a lighting circuit included in the fluid treatment device.

### BACKGROUND ART

Manufacturing of high-purity water is essential for cleaning of semiconductors or precision devices, manufacturing of pharmaceuticals, microanalysis devices, and other purposes. For instance, in a process for manufacturing semiconductor devices, cleaning treatment involves using a chemical solution and a detergent in high concentrations and a large amount of pure water (ultrapure water) for rinsing the chemical solution and the detergent out. In recent years, with the progress of miniaturization, densification, and integration of the circuit pattern of semiconductor devices, demand for improved pure water quality has been growing. Pure water used in cleaning and other processes is required to have an extremely low level of total organic carbon (TOC), one of water quality control items indicating organic carbon concentration. This is because, if the pure water contains a large amount of organic matter, the organic matter may be carbonized in a subsequent heat treatment process, causing faulty insulation.

Against the backdrop of growing demand for improved pure water quality, in recent years, various methods for decomposing a minute quantity of organic matter contained in pure water and removing the organic matter have been considered. Of these methods, a typical method is a method for decomposing and removing organic matter contained in water or fluid by irradiating the water with ultraviolet light (refer to Patent Document 1 below).

### PRIOR ART DOCUMENT

### PATENT DOCUMENT

Patent Document 1: JP-B2-6432442

### SUMMARY OF THE INVENTION

### PROBLEMS TO BE SOLVED BY THE INVENTION

A device described in Patent Document 1 above is a fluid treatment device that irradiates a fluid with ultraviolet light from a dielectric barrier discharge lamp configured to be lit by causing the fluid to be treated to flow in between electrodes and thereby forming an electric conduction path.

The inventor of the present invention has intensively studied on a way of further improving the fluid treatment device and noticed that in the conventional fluid treatment device, a lighting state of the dielectric barrier discharge lamp gradually becomes unstable or the dielectric barrier discharge lamp becomes turned off in a process of treating the fluid in certain cases.

In view of the above problem, it is an object of the present invention to provide a fluid treatment device and a lighting circuit that allow a dielectric barrier discharge lamp to be stably lit irrespective of state of treatment of a fluid.

### MEANS FOR SOLVING THE PROBLEMS

A fluid treatment device according to the present invention includes: a lighting circuit of a flyback type, the lighting circuit including a direct-current power source, a transformer including a primary winding and a secondary winding, at least one switching element, and a controller to control switching of the switching element between an ON state and an OFF state; and an ultraviolet irradiation unit connected to the secondary winding of the transformer, the ultraviolet irradiation unit including a light-emitting tube in which a light-emitting gas is sealed, a first electrode, and a second electrode disposed separately from the light-emitting tube and the first electrode disposed in the light-emitting tube, wherein a space into which a fluid to be treated flows being interposed between the first electrode and the second electrode.

To light a dielectric barrier discharge lamp, a lighting method for applying a voltage to the dielectric barrier discharge lamp from a direct-current power source through a transformer can be used. Examples of specific circuit types include a flyback type, a push-pull type, a half-bridge type, and a full-bridge type.

As described above, while a fluid is treated, in other words, while the dielectric barrier discharge lamp is lit, the fluid treatment device is in a state in which the dielectric barrier discharge lamp and the fluid, which has a lower electrical conductivity compared to a wire and other components of an electric circuit, form an electric conduction path by being connected in series. To apply a voltage necessary for lighting to the dielectric barrier discharge lamp in such a state, a higher level of electromotive force needs to be generated on a secondary side of the transformer compared to a case in which the wire is directly connected without via the fluid.

Under such circumstances, of the lighting circuit types described above, the push-pull type, the half-bridge type, or the full-bridge type, which is expected to produce relatively large output, is generally used.

Thus, the present inventor has previously considered designing a fluid treatment device with a dielectric barrier discharge lamp for fluid treatment of which has a lighting circuit of the push-pull type, the half-bridge type, or the full-bridge type, which is generally applied to the conventional dielectric barrier discharge lamp.

However, in the fluid treatment device using the above type, a phenomenon as described above occurs, in certain cases, in which the dielectric barrier discharge lamp gets in an unstable lighting state or becomes turned off in the process of treating the fluid.

The present inventor has found, through intensive research, that the phenomenon is caused by the progression of treatment of the fluid and a resultant change in electrical conductivity of the fluid. This will be described in detail below.

All of the push-pull type lighting circuit, the half-bridge type lighting circuit, and the full-bridge type lighting circuit change a direction of a current generated in the primary winding of the transformer in accordance with switching between the ON state and the OFF state of the switching element, and generate electromotive force in the secondary winding of the transformer. All of these circuit types have a circuit configuration in which a closed circuit is always formed except a moment when the switching element is switching.

The transformer is a circuit element or a circuit device that generates electromotive force in the secondary winding in response to a change in the current in the primary winding. Generally, electromotive force is also generated in the primary winding in response to a change in the current flowing through the secondary winding.

After electrical discharge stops between the electrodes of the dielectric barrier discharge lamp, an electric charge stored between the electrodes is released. In response to the release of such an electric charge, a current in a direction opposite to that of the current during lighting of the dielectric barrier discharge lamp is generated in the secondary winding of the transformer. When the current is generated, the current flowing through secondary winding of the transformer changes as described above, and thus electromotive force is generated in the primary winding.

At a point in time when electromotive force is generated in the primary winding, the switching element connected to the primary winding has already switched between the ON state and the OFF state. Thus, the electromotive force generated in the primary winding due to the above-described phenomenon causes a change in voltage division ratio to the elements in a closed circuit connected to the primary winding. Such a change affects magnitude of the current flowing through the primary winding of the transformer after the switching element switches between the ON state and the OFF state.

While treatment of the fluid is in progress, electrical conductivity of the fluid often changes due to decomposition and removal of impurities and other reasons. In one example, when TOC is decomposed and removed by irradiation of water by ultraviolet light, electrical conductivity of the water decreases in response to a reduction in organic matter.

A change in the electrical conductivity affects magnitude and a transient characteristic of the current flowing through the secondary winding after electrical discharge stops between the electrodes of the dielectric barrier discharge lamp. The change in the current flowing through the secondary winding affects magnitude of the electromotive force generated in the primary winding after the switching element switches between the ON state and the OFF state.

Further, the magnitude of the current generated in the primary winding after the switching element has switched affects magnitude of the current flowing through the primary winding to generate electromotive force for lighting the dielectric barrier discharge lamp. The magnitude of the current generated in the primary winding affects electromotive force to be generated in the secondary winding of the transformer connected to the dielectric barrier discharge lamp.

In other words, for a circuit configuration in which the closed circuit is always formed except a moment when the switching element is switching, a change in the electrical conductivity of the fluid affects electromotive force to be generated in the secondary winding of the transformer connected to the dielectric barrier discharge lamp.

When the fluid treatment device is put into a state in which electromotive force needed to light the dielectric barrier discharge lamp is not generated owing to a change in the electrical conductivity of the fluid, the phenomenon as described above occurs in which the dielectric barrier discharge lamp gets in an unstable lighting state or becomes turned off.

The present inventor, who has found the cause of the problem as described above, has come up with a new idea that for a lighting circuit for the dielectric barrier discharge lamp configured to be lit by interposition of a fluid to be treated between electrodes, a circuit configuration that is less likely to be affected by electromotive force generated in the primary winding should be used rather than the conventional configuration selected based on the amount of electric energy.

Unlike the other types such as the push-pull type, a lighting circuit of the flyback type causes a circuit connected to a primary winding of a transformer to switch between an opened circuit and a closed circuit in response to switching of a switching element between the ON state and the OFF state. In other words, when the dielectric barrier discharge lamp stops electrical discharge and electromotive force is generated in the primary winding, the switching element is in the OFF state.

Most of the electromotive force generated in the primary winding after the dielectric barrier discharge lamp stops electrical discharge is consumed by heat generation at circuit elements, the release of an electric charge to a ground terminal, and other factors on an occasion when the switching element switches from the OFF state to the ON state next time. As a result, the electromotive force generated in the primary winding in the lighting circuit of the flyback type hardly affects electromotive force to be generated in the secondary winding.

Thus, in the fluid treatment device configured as described above, the voltage applied to the dielectric barrier discharge lamp is hardly affected by a change in electrical conductivity of the fluid caused by progression of treatment of the fluid. In other words, the fluid treatment device configured as described above allows the dielectric barrier discharge lamp to be stably lit irrespective of state of treatment of the fluid.

In the fluid treatment device described above, the switching element may include a parasitic diode.

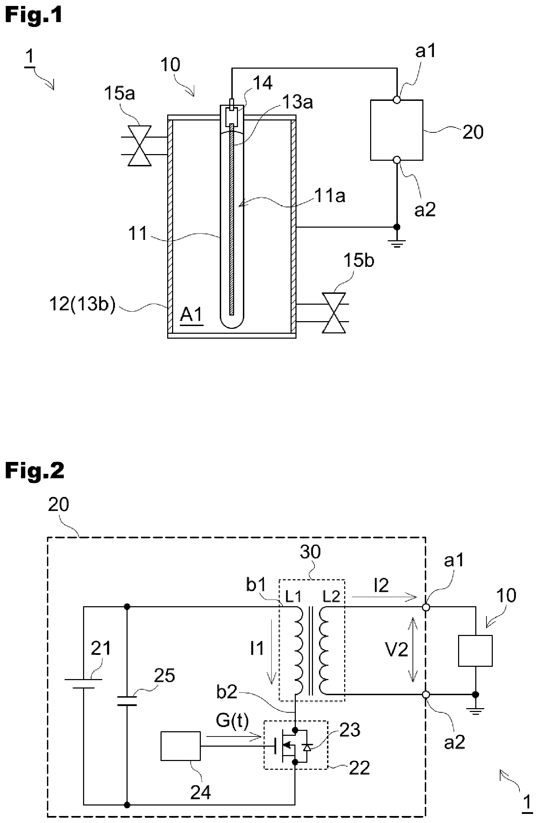

A simplest configuration in a case where the lighting circuit is the flyback type circuit is a configuration in which the direct-current power source, the primary winding of the transformer, and one switching element are connected in series (see Fig. 2). The circuit having the configuration described above performs ON/OFF control on the switching element to switch supplying and stopping a current that flows through the primary winding of the transformer (hereinafter referred to as a "primary current" in some cases), and generates electromotive force in the secondary winding.

In the flyback type lighting circuit, after the switching element has entered into the OFF state, if a current that flows through the secondary winding of the transformer (hereinafter referred to as a "secondary current" in some cases) stops, a voltage having a polarity that is reverse to a polarity of the direct-current power source is induced into the primary winding of the transformer. When this induced voltage has been generated, in a case where a circuit in which the direct-current power source, the primary winding of the transformer, and the switching element are connected in series has become an open circuit due to the switching element being in the OFF state, a high voltage is applied between input/output terminals of the switching element, and in the worst case, the switching element is damaged.

In view of this, the configuration described above forms a route through which a current flows from a negative-electrode side to a positive-electrode side of the direct-current power source when a voltage induced into the primary winding of the transformer has become greater than a voltage applied by the direct-current power source. In this case, a voltage to be applied between the input/output terminals of the switching element is the same as a forward voltage of the parasitic diode, and this prevents the switching element from being damaged. Note that a current that flows through the primary winding of the transformer via the parasitic diode is referred to as a "regenerative current" in some cases.

The fluid treatment device described above may include a detector to detect a primary current flowing through the primary winding, and the controller, according to a detection signal from the detector, may change a frequency at which the switching element switches between the ON state and the OFF state.

In the fluid treatment device described above, the detector may include a resistor connected in series with the switching element.

The detector including the resistor is, for example, a resistance element or a shunt resistor and is configured to detect directly or indirectly a current value of the current flowing through the resistor or a voltage value of the voltage applied across terminals of the resistor. In other words, detection by the detector including the resistor means detecting the current value of the current flowing through the resistor, the voltage value of the voltage applied across the terminals of the resistor, or a parameter correlative with either of these values.

In the fluid treatment device described above, the detector may include a diode element connected in parallel with the resistor, and the diode element may include an anode terminal connected to a negative electrode terminal side of the direct-current power source and a cathode terminal connected to a positive electrode terminal side of the direct-current power source.

The flyback type lighting circuit, as described above, allows the dielectric barrier discharge lamp to be stably lit since even a change in the electrical conductivity of a liquid hardly affects electromotive force to be generated in the secondary winding.

However, in a case in which the electrical conductivity of the fluid is extremely high, a fluctuation in the regenerative current can cause a primary current to rise. This is because a power load on the circuit on the side of the primary winding of the transformer gets higher, and depending on the designed circuit configuration, it is possible that the load exceeds a rated power. Concern about this grows particularly when the electrical conductivity of the liquid to be treated is in an extremely high state (100 µS/cm or higher, for example).

Hence, the fluid treatment device configured as described above, in response to a substantial change in electrical conductivity of the fluid, detects the current flowing through the primary winding with the detector and outputs a detection signal from the detector to the controller to control switching of the switching element between the ON state and the OFF state through the controller. By this control, the fluid treatment device prevents an excessive power load from being placed on the circuit on the side of the primary winding of the transformer when the electrical conductivity of the fluid changes considerably. In other words, the fluid treatment device configured thus provides an extended allowable range for the electrical conductivity of the fluid to be treated compared with other configurations.

In the fluid treatment device described above, the controller may be configured to execute a process in a first control mode in which the ON state and the OFF state of the switching element are repeated at a predetermined frequency and in a second control mode in which the switching element is held in the OFF state for a period longer than a cycle of iterating the ON state and the OFF state of the switching element in the first control mode. The controller may determine the period of execution in the second control mode according to a detection signal from the detector.

According to the configuration above, a power value (a voltage value, a current value, or a product of these values) in a circuit on the side of the primary winding of the transformer is controlled to be less than or equal to a reference value that is equivalent to, for example, a tolerance limit value in a configuration of the circuit.

A lighting circuit according to the present invention is the lighting circuit included in the fluid treatment device described above.

### EFFECT OF THE INVENTION

According to the present invention, it is possible to achieve a fluid treatment device and a lighting circuit that allow a dielectric barrier discharge lamp to be stably lit irrespective of state of treatment of a fluid.

### BRIEF DESCRIPTION OF THE DRAWINGS

Fig. 1 is a schematic view showing a configuration of a fluid treatment device according to an embodiment.
Fig. 2 is a schematic view showing a configuration of a lighting circuit according to an embodiment.
Fig. 3 is a schematic timing chart showing an example of changes in control signal, primary current, secondary voltage, and secondary current over time.
Fig. 4 is a schematic view showing a configuration of a lighting circuit in a fluid treatment device according to another embodiment.
Fig. 5 is a schematic timing chart showing changes in control signal and secondary voltage over time and a method for determination by a controller in response to a voltage detected by a detector.
Fig. 6 is a schematic timing chart showing an example of changes in control signal, primary current, secondary voltage, and secondary current over time.

### MODE FOR CARRYING OUT THE INVENTION

A fluid treatment device and a lighting circuit according to the present invention will be described hereinafter with reference to the drawings. It is to be noted that all the drawings are schematically shown, and numbers of parts on the drawings are not always the same as the actual numbers of parts.

The following description is given on the assumption that a fluid to be treated is water. However, the fluid to be treated applicable in the present invention is not limited to water. Specifically, any fluids such as a liquid containing a substance that is being decomposed and removed and a liquid that is being sterilized by being irradiated with ultraviolet light can be targets to be treated by the fluid treatment device of the present invention.

### [Fluid treatment device 1]

First, a configuration of a fluid treatment device 1 will be described. Fig. 1 is a schematic view showing the configuration of the fluid treatment device 1 according to an embodiment. As shown in Fig. 1, the fluid treatment device 1 includes an ultraviolet irradiation unit 10 and a lighting circuit 20. The ultraviolet irradiation unit 10 includes a light-emitting tube 11, a reservoir 12, and a first electrode 13a.

As shown in Fig. 1, a first electrode 13a in the shape of a rod is disposed in a discharge space 11a inside the light-emitting tube 11. The first electrode 13a is connected to a first electrode terminal a1 of the lighting circuit 20 through a pinch seal part 14 formed on one end side of the light-emitting tube 11.

The light-emitting tube 11 is a tubular body made of quartz glass, and xenon (Xe) gas is sealed as a light-emitting gas in the discharge space 11a inside the light-emitting tube 11. The light-emitting gas sealed in the discharge space 11a inside the light-emitting tube 11 is freely selected depending on treatment applied. A specific example of a gas that can be selected other than the above is a gas containing an element of group 18, such as xenon (Xe) gas, argon (Ar) gas, or krypton (Kr) gas, or a gas containing an element of group 17, such as fluorine (F) gas, chlorine (CI) gas, or bromine (Br) gas, and the element of group 18.

A material for the light-emitting tube 11 is appropriately selected depending on a wavelength band for ultraviolet light with which the fluid to be treated is to be irradiated. A specific material other than quartz glass is, for example, borosilicate glass.

The reservoir 12 is a container into which water to be treated flows, and a space A1 inside the reservoir 12 is filled with the water during treatment with valves (15a, 15b) that are closed. The reservoir 12 is the container including a side wall made of a metal that has electrical conductivity. As shown in Fig. 1, the side wall is connected to a second electrode terminal a2 of the lighting circuit 20 and is electrically grounded. In other words, the reservoir 12 according to the present embodiment is the container that stores water to be treated inside the space A1 and also functions as a second electrode 13b.

When a voltage necessary for lighting starts to be applied to the electrodes (13a, 13b) of the ultraviolet irradiation unit 10 from the lighting circuit 20 with the space A1 inside the reservoir 12 being filled with water to be treated, an electric discharge occurs inside the discharge space 11a, as the discharge space 11a of the light-emitting tube 11 is disposed between the electrodes (13a, 13b) through the discharge space 11a, a tube wall of the light-emitting tube 11, and the space A1. This is because the liquid as well as the light-emitting tube 11 made of a dielectric material are materials having impedance, and a dielectric barrier discharge is generated when a voltage is applied into the light-emitting tube 11 via the liquid. In response to the occurrence of the electric discharge between the electrodes (13a, 13b), ultraviolet light is generated inside the discharge space 11a of the light-emitting tube 11, and the water stored inside the space A1 is irradiated with the ultraviolet light. In other words, the ultraviolet irradiation unit 10 as a whole is equivalent to a dielectric barrier discharge lamp that includes the light-emitting tube 11, the first electrode 13a, and the reservoir 12 (the second electrode 13b).

In the present embodiment, the fluid treatment device is described in which when water to be treated is irradiated with ultraviolet light, the water at a standstill is treated with the valves (15a, 15b) being closed. However, the fluid treatment device 1 does not need to include the valves (15a, 15b) and may be configured to irradiate water flowing in at all times with ultraviolet light.

For instance, a configuration may be employed in which a pipe, a hose, or the like is connected to an inlet into which water flows and to an outlet from which treated water is discharged and water being circulated is treated. According to this configuration, a volume of water that cannot be accommodated in the reservoir 12 at one time can be treated on one occasion.

A light-emitting tube 11 applicable to the present invention is not limited to the one in the embodiment of Fig. 1. The first electrode 13a is disposed inside the light-emitting tube 11 (the discharge space 11a) but may be disposed in a region outside the discharge space 11a, for example. For instance, in an aspect where the discharge space 11a of the light-emitting tube 11 is disposed between the first electrode 13a and the second electrode 13b, a variety of forms can be employed. The second electrode 13b disposed separately from the light-emitting tube 11 is allowed to apply a voltage into the discharge space 11a through the liquid having a predetermined impedance being interposed between the light-emitting tube 11 and the second electrode 13b.

### [Lighting circuit 20]

Next, the lighting circuit 20 will be described in detail. Fig. 2 is a schematic view showing a configuration of the lighting circuit 20 according to the present embodiment. The lighting circuit 20 is an example of a configuration referred to as a flyback type lighting circuit and as shown in Fig. 2, includes a direct-current power source 21, a single switching element 22, and a transformer 30.

The transformer 30 includes a primary winding L1 and a secondary winding L2. The primary winding L1 of the transformer 30 includes a first terminal b1 and a second terminal b2. The first terminal b1 is connected to a positive electrode-side terminal of the direct-current power source 21, and the second terminal b2 is connected to a negative electrode-side terminal of the direct-current power source 21 via the switching element 22.

The switching element 22 according to the present embodiment is constituted by a field effect transistor (FET) and includes a parasitic diode 23 in which an anode is connected to the negative electrode-side terminal of the direct-current power source 21 and a cathode is connected to the primary winding L1 of the transformer 30. In the present embodiment, this parasitic diode 23 functions as a regenerative circuit.

Note that as the switching element 22, an element different from a field effect transistor (FET) may be employed. Furthermore, as the switching element 22, an IGBT, a relay element, or the like that does not include the parasitic diode 23 may be employed, and a single diode element may be connected in parallel to the switching element 22 to form the regenerative circuit.

The direct-current power source 21 may be constituted by, for example, an AC/DC converter to perform AC/DC conversion of a commercial power source not shown. The lighting circuit 20 includes a smoothing capacitor 25 to smoothen a voltage waveform. The direct-current power source 21 may be constituted by a battery.

The lighting circuit 20 according to the present embodiment includes a controller 24 to perform ON/OFF control on the switching element 22. It is sufficient if the controller 24 outputs a control signal G(t) having a desired pattern, and, for example, a CPU, an MPU, or the like, which is a control unit, can be employed.

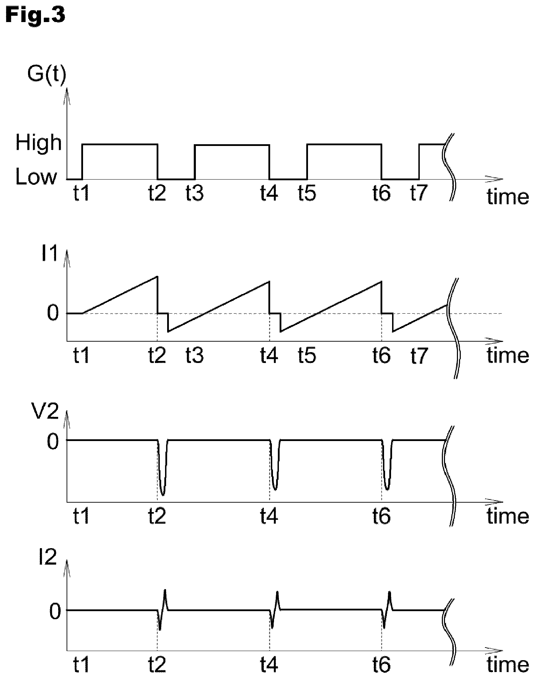

Next, an operation of the lighting circuit 20 will be described. Fig. 3 is a schematic timing chart showing an example of changes in control signal G(t), primary current I1, secondary voltage V2, and secondary current I2 over time.

In a graph of the control signal G(t) in Fig. 3, a High level indicates that the switching element 22 is in the ON state under control, and a Low level indicates that the switching element 22 is in the OFF state under control.

The secondary voltage V2 shown in Fig. 3 corresponds to a potential of the first electrode terminal a1 relative to a potential of the second electrode terminal a2 in Fig. 2. In the present embodiment, the second electrode terminal a2 is grounded.

Graphs indicating a change in voltage or current shown in the drawings referred to in the description below do not indicate an offset, spike noise produced by switching operation, and other elements that do not affect the description of a principal operation of the present invention, and schematically indicate an example of an ideal waveform, similarly to the graph indicating the secondary voltage V2 in Fig. 3. Furthermore, whether the secondary voltage V2 shifts to a + side or a - side relative to a predetermined voltage (in the present embodiment, 0 V) may be appropriately and arbitrarily set according to the specifications of the ultraviolet irradiation unit 10, a configuration of the lighting circuit 20, or the like.

When the reservoir 12 is filled with water to be treated, the controller 24 starts an operation to generate ultraviolet light in the light-emitting tube 11 of the ultraviolet irradiation unit 10 which is equivalent to a dielectric barrier discharge lamp.

The controller 24 switches the control signal G(t) from the Low level to the High level to switch the switching element 22 from the OFF state to the ON state.

Then, as shown in Fig. 3, the primary current I1 flowing through the primary winding L1 of the transformer 30 gradually increases. An inclination of the increasing primary current I1 at this time is V_{cc}/Lₜ, where V_{cc} is an output voltage of the direct-current power source 21 and Lₜ is an inductance value of the primary winding L1.

At a time t2 when a predetermined time has elapsed from a time t1, the controller 24 switches the control signal G(t) output from the High level to the Low level. This causes the switching element 22 to switch from the ON state to the OFF state.

In response to the application of the secondary voltage V2, the secondary current I2 flows through the secondary winding L2 of the transformer 30. The secondary current I2 flows while releasing energy stored in the transformer 30, and therefore comes closer to a zero value as time passes. When the release of energy stored in the transformer 30 is completed by the secondary current I2, an electric charge stored in the light-emitting tube 11 is released. Due to such electric discharge, a current (secondary current I2) flows through the secondary winding L2 of the transformer 30 in a direction opposite to the previous direction so that the secondary voltage V2 changes to come closer to a zero value.

At this time, electromotive force is generated in the primary winding L1 of the transformer 30 by energy that has not been consumed in the ultraviolet irradiation unit 10 and in response to this electromotive force, a regenerative current is generated. In the present embodiment, the regenerative current flows from the negative electrode terminal side to the positive electrode terminal side of the direct-current power source 21 due to the parasitic diode 23 included in the switching element 22. The parasitic diode 23 disposed in this way provides increased efficiency in the use of energy.

After that, at a time t3 following the elapse of a time for which the regenerative current is expected to eventually stop flowing, the controller 24 again switches the control signal G(t) output to the switching element 22 from the Low level to the High level to switch the switching element 22 from the OFF state to the ON state. The controller 24 hereinafter repeats the operation described above.

As observed from the timing chart shown in Fig. 3, according to the lighting circuit 20, while the electric discharge in the ultraviolet irradiation unit 10 stops and a current indicating a negative value is generated in the primary winding L1, the secondary voltage V2 between the electrode terminals (a1, a2) and the secondary current I2 flowing through the secondary winding L2 do not fluctuate at all. After the current flowing through the primary winding L1 stops, the same operation as the preceding operation during the period t1 to t2 is performed.

Thus, in the fluid treatment device 1 configured as described above, the voltage applied to the ultraviolet irradiation unit 10, which is equivalent to a dielectric barrier discharge lamp, is hardly affected by a change in electrical conductivity of the water to be treated caused by progression of the treatment. In other words, the fluid treatment device 1 configured as described above allows the ultraviolet irradiation unit 10 to be stably lit irrespective of state of treatment of the fluid to be treated.

In the present embodiment, the ultraviolet irradiation unit 10 includes the reservoir 12 that has a metal-made side wall, and the reservoir 12 also functions as the second electrode 13b of the dielectric barrier discharge lamp. However, the second electrode 13b may be disposed separately from the reservoir 12. For instance, an outer wall surface of the reservoir 12 may be made of a dielectric material and a second electrode 13b may be disposed on the outer wall surface. The valves (15a, 15b) made of a metal may be employed, and at least one of the valves (15a, 15b) may also function as a second electrode 13b.

In the present embodiment, the second electrode 13b is grounded. If the ultraviolet irradiation unit 10 (the dielectric barrier discharge lamp) does not have any problem especially in electrical stability, the second electrode 13b does not need to be grounded.

### [Other embodiments]

Other embodiments will now be described.

<1> In the embodiment shown in Fig. 2, an embodiment described above includes the switching element 22 that has the parasitic diode 23. This provides increased efficiency in the use of electric energy since the regenerative current flowing through the primary winding L1 of the transformer 30 flows from the negative electrode terminal side to the positive electrode terminal side of the direct-current power source 21 due to the parasitic diode 23 included in the switching element 22.

However, a current value of the regenerative current fluctuates depending on impedance of the liquid present in the reservoir 12. As a specific example, due to a change in electrical conductivity of the water, an amount of the energy that has not been consumed in the ultraviolet irradiation unit 10 changes, and as a result, the current value of the regenerative current fluctuates. The fluctuation in regenerative current causes the primary current I1 to fluctuate even if the switching element 22 switches between the ON state and the OFF state with a fixed timing.

The lighting circuit 20 of the flyback type, as described above, allows the dielectric barrier discharge lamp to be stably lit since even a change in the electrical conductivity of the liquid hardly affects electromotive force to be generated in the secondary winding L2. However, in a case in which the electrical conductivity of the fluid is extremely high, a fluctuation in the regenerative current can cause the primary current I1 to greatly fluctuate. There is a possibility that such a fluctuation may lead to a rise in power load on the circuit on the side of the primary winding L1 of the transformer 30 and depending on the designed circuit configuration, may generate electric energy greater than a rated power. Such concern grows particularly when the electrical conductivity of the liquid to be treated is in an extremely high state (100 µS/cm or higher, for example).

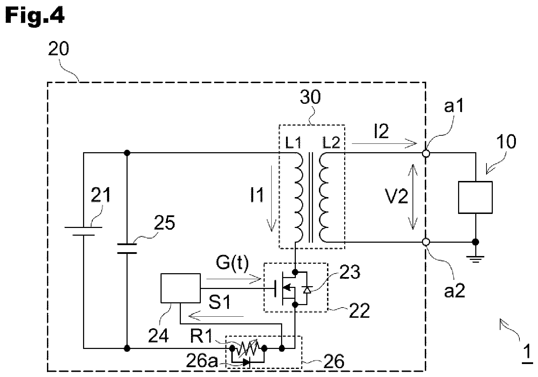

Fig. 4 is a schematic view showing a configuration of a lighting circuit 20 in a fluid treatment device 1 according to another embodiment. The lighting circuit 20 according to the present embodiment includes, as shown in Fig. 4, a detector 26 connected in series with a switching element 22. As shown in Fig. 4, the detector 26 according to the present embodiment includes a resistor R1 and is configured to output a detection signal S1 including a value of voltage that is generated between terminals of the resistor R1 by a flow of a primary current I1 flowing through the switching element 22. However, this configuration should not be construed to limit the configuration of the detector 26. For instance, the detector may include a shunt resistor and may be configured to measure a value of shunted current and thereby detect a current value of the primary current I1.

In addition to the resistor R1, the detector 26 may include a diode element 26a that includes an anode terminal connected to a negative electrode terminal side of a direct-current power source 21 and a cathode terminal connected to a positive electrode terminal side of the direct-current power source 21, to prevent the detector 26 from consuming a regenerative current flowing through a circuit on the side of a primary winding L1.

As a result of this, in response to a substantial change in electrical conductivity of the liquid, the detector 26 detects the fluctuation in the electrical conductivity and outputs the detection signal S1 to a controller 24, and based on information contained in the detection signal S1, the controller 24 controls an ON/OFF state of the switching element 22. In other words, this configuration is designed to minimize a load on the circuit on the side of the primary winding L1 in a case in which the electrical conductivity of the liquid fluctuates considerably. Thus, the fluid treatment device 1 having the configuration provides an extended allowable range for the electrical conductivity of the liquid to be treated compared with other configurations.

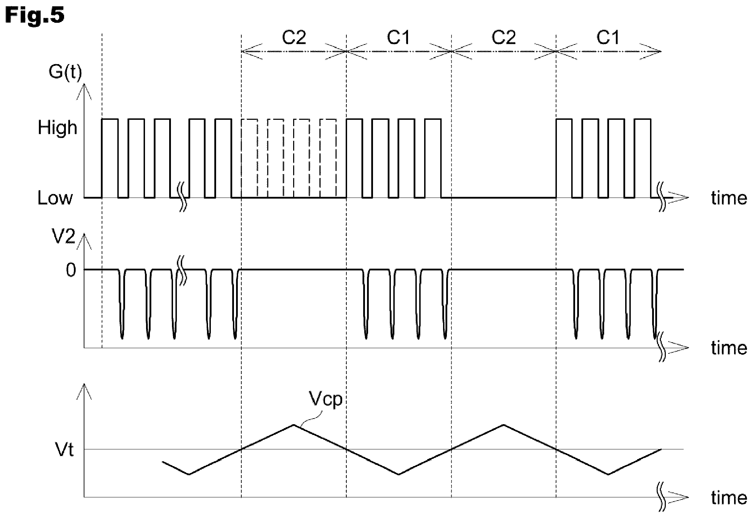

Next, an operation in the present embodiment will be described. Fig. 5 is a schematic timing chart showing changes in control signal G(t) and secondary voltage V2 over time and a method for determination by the controller 24 in response to a voltage detected by the detector 26. The detector 26 connected to the circuit on the side of the primary winding L1 detects a voltage during a flow of the primary current I1 through the detector 26 and transmits a detection signal to the controller 24. Although not shown in Fig. 4, the controller 24 is equipped with a comparator to compare a detection voltage (Vcp = R1 × 11) output from the detector 26 with a predetermined reference voltage and output an output signal that responds to a comparison result. However, the controller 24 is not necessarily equipped with the comparator, and necessary circuit parts may be combined to constitute the comparator.

By detecting a current value or a power value in the circuit on the side of the primary winding L1 of the transformer 30 through the detector 26, the controller 24 shifts from a first control mode C1 in which a normal operation is performed to a second control mode C2 in which excess electric power is suppressed at a timing when a product of the primary current I1 multiplied by a resistance value of the resistor R1, i.e., the value of voltage between the terminals of the resistor R1, reaches a predetermined reference voltage. In the present embodiment, as shown in Fig. 5, a process in the second control mode is executed for a period longer than an iteration cycle of the ON state and the OFF state of the switching element 22 in the first control mode. However, the period of execution in the second control mode may be appropriately set.

By switching between the first control mode C1 and the second control mode C2 in this way, the controller controls the power value to ensure that the power value is less than or equal to a predetermined reference value even if the electrical conductivity of the liquid fluctuates considerably. The controller 24 may employ various methods, other than the above method, to control the power value in the circuit on the side of the primary winding L1 of the transformer 30.

In the second control mode C2, the control signal G(t) for the switching element 22 is maintained in the OFF state during the period for which a comparison voltage Vt is lower than a detection voltage Vcp that periodically fluctuates. This allows the power value in the circuit on the side of the primary winding L1 to be controlled to less than or equal to the reference value. This configuration reliably reduces a load on the circuit on the side of the primary winding L1 even if the electrical conductivity of the liquid fluctuates. Without being limited to an aspect of the embodiment in Fig. 5, the process in the second control mode may be executed during a period for which the comparison voltage Vt is higher than the detection voltage Vcp to control the power value such that the control signal G(t) for the switching element is maintained in the OFF state. The detection voltage Vcp used in this case shows a waveform having a phase opposite to that of the waveform shown in Fig. 5.

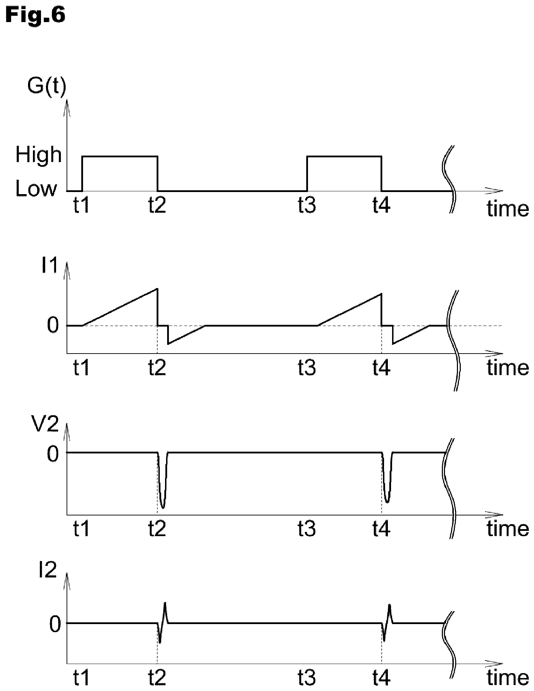

<2> Fig. 6 is a schematic timing chart showing an example of changes in control signal G(t), primary current I1, secondary voltage V2, and secondary current I2 over time. This timing chart shows a case in which the controller 24 operates so as to shift the switching element 22 from the OFF state to the ON state after the elapse of a predetermined OFF holding time following a point in time at which the regenerative current flowing through the primary winding L1 reaches a zero value.

In the present embodiment, the control signal G(t) from the controller 24 is set such that the time during which the switching element 22 is held in the OFF state varies according to the detection signal S1 from the detector 26. This allows the power value in the circuit on the side of the primary winding L1 to be controlled to less than or equal to the reference value. Thus, electric energy in the circuit on the side of the primary winding L1 is controlled in response to the detection signal S1 from the detector 26. This configuration helps to reliably reduce a load on the circuit on the side of the primary winding L1 if the electrical conductivity of the liquid fluctuates.

<3> The configurations of the fluid treatment device 1 and the lighting circuit 20 described above are merely examples, and the present invention is not limited to the illustrated configurations.

### DESCRIPTION OF REFERENCE SIGNS

- 1: Fluid treatment device
- 10: Ultraviolet irradiation unit
- 11: Light-emitting tube
- 11a: Discharge space
- 12: Reservoir
- 13a: First electrode
- 13b: Second electrode
- 14: Pinch seal part
- 20: Lighting circuit
- 21: Direct-current power source
- 22: Switching element
- 23: Parasitic diode
- 24: Controller
- 25: Smoothing capacitor
- 26: Detector
- 26a: Diode element
- 30: Transformer
- A1: Space
- L1: Primary winding
- L2: Secondary winding
- a1: First electrode terminal
- a2: Second electrode terminal
- b1: First terminal
- b2: Second terminal

## Claims

1. A fluid treatment device (1) comprising:
a lighting circuit (20) of a flyback type, the lighting circuit (20) including
a direct-current power source (21),
a transformer (30) including a primary winding (L1) and a secondary winding (L2), at least one switching element (22), and
a controller (24) to control switching of the switching element (22) between an ON state and an OFF state; and
an ultraviolet irradiation unit (10) connected to the secondary winding (L2) of the transformer (30), the ultraviolet irradiation unit (10) including
a light-emitting tube (11) in which a light-emitting gas is sealed,
a first electrode (13a) disposed in the light-emitting tube (11), and
a second electrode (13b) disposed separate from the light-emitting tube (11) and the first electrode,
wherein a space (A1) into which a fluid to be treated flows being interposed between the first electrode (13a) and the second electrode (13b).

2. The fluid treatment device (1) according to claim 1, wherein the switching element (22) includes a parasitic diode (23).

3. The fluid treatment device (1) according to claim 1, comprising a detector (26) to detect a primary current flowing through the primary winding (L1),
wherein the controller (24), according to a detection signal (S1) from the detector (26), changes a frequency at which the switching element (22) switches between the ON state and the OFF state.

4. The fluid treatment device (1) according to claim 3, wherein the detector (26) includes a resistor (R1) connected in series with the switching element (22).

5. The fluid treatment device (1) according to claim 4, wherein the detector (26) includes a diode element (26a) connected in parallel with the resistor (R1), the diode element (26a) including an anode terminal connected to a negative electrode terminal side of the direct-current power source (21) and a cathode terminal connected to a positive electrode terminal side of the direct-current power source (21).

6. The fluid treatment device (1) according to claim 3, wherein the controller (24) is configured to execute a process in a first control mode in which the ON state and the OFF state of the switching element (22) are repeated at a predetermined frequency and in a second control mode in which the switching element (22) is held in the OFF state for a period longer than a cycle of iterating the ON state and the OFF state of the switching element (22) in the first control mode, and the controller (24) determines the period of execution in the second control mode according to the detection signal (S1) from the detector (26).

7. The lighting circuit (20) according to any one of claims 1 to 6.
